**Europäisches Patentamt**

**European Patent Office**

**Office européen des brevets**

(19)

(11) Publication number : **0 420 611 B1**

(12)

# EUROPEAN PATENT SPECIFICATION

(45) Date of publication of patent specification :
20.12.95 Bulletin 95/51

(51) Int. Cl.$^6$ : **G06F 17/40**

(21) Application number : **90310533.6**

(22) Date of filing : **26.09.90**

(54) **A device for analyzing a transient waveform**

(30) Priority : **26.09.89 JP 250272/89**
**27.03.90 JP 78422/90**
**27.03.90 JP 78423/90**

(43) Date of publication of application :
**03.04.91 Bulletin 91/14**

(45) Publication of the grant of the patent :
**20.12.95 Bulletin 95/51**

(84) Designated Contracting States :
**BE DE GB**

(56) References cited :
**WO-A-88/07670**
**IEEE TRANSACTIONS ON BIO-MEDICAL EN-GINEERING vol. 36, no. 2, February 1989, NEW YORK, USA pages 222 - 231 K. NISHIYAMA, T. MITA 'High Resolution NMR Spectroscopy Using a Recursive Algorithm'**

(56) References cited :
**SYSTEM MODELLING AND SIMULATION, CONFERENCE 18-21 SEPT 1988, IMACS 1989, AMSTERDAM, NL pages 91 - 96 M. MILANESE, A. VICINO 'Robust Estimation and Exact Uncertainty Intervals Evaluation for Nonlinear Models'**

(73) Proprietor : **RESEARCH DEVELOPMENT CORPORATION OF JAPAN**
**2-5-2, Nagato-cho**
**Chiyoda-ku, Tokyo (JP)**

(72) Inventor : **Sasaki, Keiji, 14-20-405,**
**Shoaza-Toriimae**
**Aza-Enmeiji,**
**Ooyamazaki-cho**
**Otokuni-gun, Kyoto (JP)**

(74) Representative : **Tomlinson, Kerry John et al**
**Frank B. Dehn & Co.**
**European Patent Attorneys**
**Imperial House**
**15-19 Kingsway**
**London WC2B 6UZ (GB)**

EP 0 420 611 B1

## Description

The present invention relates to a device for analyzing a transient waveform. More particularly, it relates to a device for analyzing a transient waveform with a high speed and a high accuracy whose computation time is much shorter.

The importance of understanding a prime process of material changes in light energy relaxation, molecule movements, photochemical reactions and other material phenomena has been recognized, and various approaches have been investigated. This is because the proper understanding of these ultra-micro phenomena will develop the control technology and promote new technological innovations to create materials.

Under such circumstances, the method in which ultrashort pulse laser beams are radiated onto a material and a prime process of material changes is analysed from the obtained transient response waveform has recently been proposed.

In general, the transient waveform observed experimentally appears in a form in which a sum of waveforms of plural exponential functions is convoluted with instrumental response functions such as a laser pulse width and information as to light energy relaxation, molecular movements, photochemical reactions and other phenomena are obtained from parameters of the individual exponential function (time constant and intensity).

Conventionally, as a method for estimating these parameters, the nonlinear least-square fitting method has been used, and computing and analyzing devices therefore have been realized up to now.

However, an impediment to putting this nonlinear least-square fitting method to practical application has been an enormous amount of computation.

During recent years, as a solution to this shortcoming, a computing device using an autoregressive model whose performance is higher than that of the nonlinear least-square computing device, has been proposed as a high-speed and highly accurate analyzing device for multi-component exponential functions.

However, this method and device using an autoregressive model has not actually been accomplished as the method and device for analyzing a transient waveform. The major reason for this is that a complicated deconvolution computation is required for the analyses of a transient waveform since a delta function is assumed as an instrumental function.

WO88/07670 describes a method and apparatus for time-resolved fluorescence spectroscopy in which a laser pulse is used to excite fluorescent photons in a sample and the transient response waveform analyzed. The preamble to claim 1 is based on this citation.

According to the present invention, there is provided a device for analyzing a transient waveform, which comprises:

a computation unit for analyzing the observed transient response waveform that appears as a convolution of a sum waveform of a material parameter exponential function

$$x(t) = \sum_{i=1}^{N} A_i \, \exp(-t/\tau_i)$$

with an instrumental response function; and

means for outputting the results of said analysis; characterised in that:

said computation unit comprises means for analysing said observed waveform using an input adaptive type autoregressive model consisting of a linear function of regressive coefficients dependent upon material parameters and represented by the equation:

$$X(j\Delta t) = C_1 \cdot X((j-1)\Delta t) + C_2 \cdot X((j-2)\Delta t) + \cdots + C_N \cdot X((j-N)\Delta t) + D_1 \cdot Y(j\Delta t) + D_2 \cdot Y((j-1)\Delta t) + \cdots + D_N \cdot Y((j-N+1)\Delta t)$$

where $X(t)$ is the observed transient response waveform, $Y(t)$ is the instrumental response function and $C_i$ and $D_i$ are the regressive coefficients dependent upon the material parameters $A_i$ and $\tau_i$; wherein the relationships between the material parameters $A_i$ and $\tau_i$ and the coefficients $C_i$ and $D_i$ are given by the equations:

$$\tau_i = -\frac{\Delta t}{\ln Z_i} \quad (i = 1, ..., N)$$

and

$$D_i = \sum_{j=1}^{N} \left( A_j \cdot Z_j^i - \sum_{k=0}^{i-1} C_{i-k} \cdot A_j \cdot Z_j^k \right)$$

and the solutions of

$$Z^N - C_1 \cdot Z^{N-1} - C_2 \cdot Z^{N-2} - \cdots - C_N = 0$$

Figs. 1(a) (b) and (c) are time-intensity correlation diagrams illustrating the observed waveform, a material response function and an instrumental response function, respectively.

Figs. 2 and 3 are diagrams illustrating a number of counts-time correlation, showing the waveforms which are considered in examples 1 and 2, respectively.

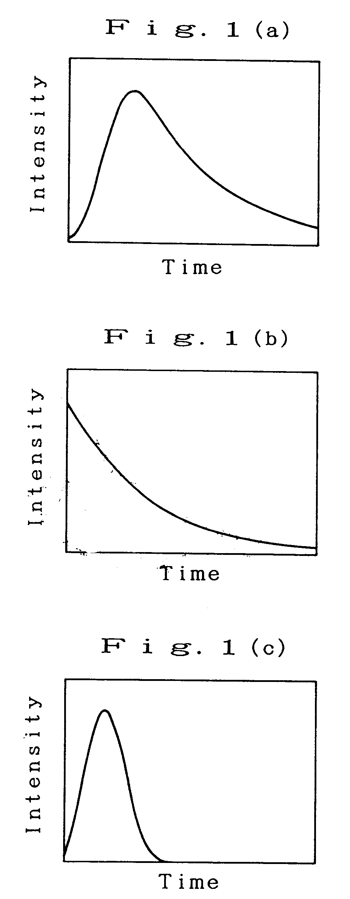

If pulsed laser beams are radiated onto a material, a unique waveform is obtained as shown in Fig. 1(a). The transient response waveform X(t) observed at this time is generally represented in the following equation.

$$X(t) = x(t) * Y(t) \quad (1)$$

where the x(t) is a material response function; Y(t) is an instrumental function resulting from pulse width and other parameters; and $*$ indicates a convolution computation. That is, the observed transient response waveform X(t) represented in the equation (1) is determined by the convolution computation of the material response function x(t) and the instrumental response function Y(t).

The material response function x(t) and the instrumental response function Y(t) are indicated, for example, in Figs. 1(b) and (c).

Furthermore, the material response function x(t) is represented as:

$$x(t) = \sum_{i=1}^{N} A_i \cdot \exp(-t/\tau_i) \qquad \cdots (2)$$

where $A_i$ and $\tau_i$ show material parameters dependent upon the state of the material.

From the equation (2), the aforementioned equation (1) is expressed as:

$$X(t) = \sum_{i=1}^{N} A_i \cdot \exp(-t/\tau_i) * Y(t) \qquad \cdots (3)$$

However, the equation (3) bears a nonlinear relationship to the unknown material parameters $A_i$ and $\tau_i$. Therefore, computation to estimate $A_i$ and $\tau_i$ from the equation (3) is extremely complicated and the amount of processing becomes enormous.

In the device for analyzing a transient waveform of the present invention, the foregoing observed transient response waveform X(t) is dealt with as a substantially different model.

The model of the device of the present invention is represented in the following equation:

$$X(j\Delta t) = C_1 \cdot X((j-1)\Delta t) + C_2 \cdot X((j-2)\Delta t) + \cdots + C_N \cdot X((j-N)\Delta t) + D_1 \cdot Y(j\Delta t) + D_2 \cdot Y((j-1)\Delta t) + \cdots + D_N \cdot Y((j-N+1)\Delta t) \quad (4)$$

where $C_i$ and $D_i$ are regression coefficients (model parameters) dependent upon the material parameters $A_i$ and $\tau_i \cdot A_i$ and $\tau_i$ are uniquely given from the solutions of the characteristic equation and input regression formula using these $C_i$ and $D_i$ as coefficients.

In other words, estimation of $C_i$ and $D_i$ is performed, assuming j=i, ... and then number of sampling points (M), by use of linear simultaneous equations in the case of M=2N, and by use of a linear least-square method in the case of M>2N. The relationships between $C_i$, $D_i$ and $A_i$, $\tau_i$ are derived from the equation (6) and the input regression formula (7) using the solutions $Z_1, Z_2 .... Z_N$ of the formula (5):

$$Z^N - C_1 \cdot Z^{N-1} - C_2 \cdot Z^{N-2} - \cdots - C_N = 0 \quad (5)$$

$$\tau_i = - \frac{\Delta t}{\ln Z_i} (i = 1, \cdots, N) \quad (6)$$

$$D_i = \sum_{j=1}^{N} (A_j \cdot Z_j^i - \sum_{k=0}^{i-1} C_{i-K} \cdot A_j \cdot Z_j^k) \qquad \cdots (7)$$

The computation model of the device of the present invention, that is, the equation (4) can be called an input adaptive type autoregressive model from what has been described above. As is clear from the equation (4), this model bears a linear relation to $C_i$ and $D_i$. For this reason, the amount of computation is reduced, for example, down to two orders compared with the equation (3). This makes it possible to analyze by adding multi-dimensional information such as space.

This means that computation time of the device of the present invention is by far shorter than that using the nonlinear least-square method, and it may be possible for the device of the present invention to be applied to the multi-dimensional time-resolution measurement.

Furthermore, this device requires no initial parameters for computation, and the estimated accuracy is equivalent or more than that obtained by the nonlinear least-square method, and this device can be applied to any instrumental function.

Incidentally, for the channel shift between the instrumental response function and the transient waveform of the sample, in the conventional nonlinear least-square method, the instrumental response function is caused to shift a bit by bit, the chi-square is evaluated, determining the amount of shift that can give the least chi-square. By this method, however, computation time became longer in proportion to the number of the shifts (normally 10 to 50 pieces) to be evaluated.

On the other hand, in the present invention, since the input adaptive autoregressive model is linear, the amount of shift itself can be incorporated into the model as an unknown parameter. The amount of shift can be determined as solutions of simultaneous equations. The amount of computation at this time is only less than 1.5 times as much as when no consideration is given to shift. Compared with the conventional nonlinear least-square method, the device of the present invention is able to reduce computation time by one order for shift. This permits the autoregressive model to be applied to any instrumental response function.

Furthermore, since the measured wavelengths are slightly different between the instrumental response function measured using scattering, etc. and that when the fluorescence of a sample is actually measured, the respective waveforms may sometimes be different from each other. Such difference makes a large error in the analysis of components with rapid damping, affecting the accuracy of analysis. As a method to avoid this, the delta function convolution method in which the reference sample of a component of the single exponential function is measured by the fluorescence wavelength the same as in measurement of the sample and the result is used in place of the instrumental response function is known. In this method, since the measured wavelengths are identical, there is no difference in the instrumental response function, but because there is no data for the instrumental response function itself, the analysis becomes complicated.

Hence, in the device of the present invention, the delta function convolution method can be modeled as a combination of plural input adaptive type autoregressive models.

That is, for example, if laser light pulses are radiated to a material, then the observed transient fluorescent waveform $X_1$ $(j\Delta t)$ is expressed in the following equation (8) as the same as the equation (4) described above:

$$X_1 (j\Delta t) = \Sigma C_i X_1((j - i)\Delta t) + \Sigma D_i Y((j - i)\Delta t) \quad (8)$$

where $Y(j\Delta t)$ is an instrumental response function.

The transient spectroscopic waveform of the second sample, $X_2(j\Delta t)$ is also given as:

$$X_2(j\Delta t) = \Sigma C_i' X_2((j - i)\Delta t) + \Sigma D_i' Y((j - i)\Delta t) \quad (9)$$

When $Y(j\Delta t)$ is eliminated from the equations (8) and (9),

$$X_1(j\Delta t) = \Sigma C_i'' X_1((j - i)\Delta t) + \Sigma D_i'' X_2((j - i)\Delta t) \quad (10)$$

Therefore, if the equation (10) is applied to the transient response wavelengths of two samples by a least square fit, it becomes possible to estimate exponential function parameters without using any instrumental response function.

Since the equation (10) becomes a linear equation to $C_i''$ and $D_i''$, the amount of computation required for estimation is extremely small, becoming effecting to the analyses of data to which space and other multidimensional informations are added.

$C_i$, $D_i$ and $C_i'$, $D_i'$ can be determined uniquely from $C_i''$ and $D_i''$, and from other linear functions of $C_i$ and $D_i$. The $D_i$ input regression formula can be dealt with in the same manner as the equations (4), (5), (6) and (7) described above.

Furthermore, the device of the present invention also permits the high-speed and highly accurate analyses of the observed transient waveform to which a spectrum information is added.

If a spectrum information is added to a transient waveform, the identification of a material or spectroscopic analyses become possible. Conventionally, to analyze the transient waveform to which such a spectrum information is added, the method known as global analysis based on the nonlinear least-squares method was employed. However, by this global analysis, the amount of computation became so exorbitant that computation time extended as long as a day, and hence it was impractical.

In the device of the present invention, when information of wavelength $(\lambda)$ is added to the X(t) represented in the above-mentioned equation (4), it can be expressed, for example, in the extended input adaptive type autoregressive model as shown in the following equation.

$$
\begin{pmatrix} X_1(2) \\ X_1(3) \\ \vdots \\ X_2(2) \\ X_2(3) \\ \vdots \\ X_n(2) \\ X_n(3) \\ \vdots \end{pmatrix} = C_1 \begin{pmatrix} X_1(1) \\ X_1(2) \\ \vdots \\ X_2(1) \\ X_2(2) \\ \vdots \\ X_n(1) \\ X_n(2) \\ \vdots \end{pmatrix} + C_2 \begin{pmatrix} X_1(0) \\ X_1(1) \\ \vdots \\ X_2(0) \\ X_2(1) \\ \vdots \\ X_n(0) \\ X_n(1) \\ \vdots \end{pmatrix} + D_{11} \begin{pmatrix} Y(2) \\ Y(1) \\ \vdots \\ 0 \\ \vdots \\ \vdots \\ 0 \end{pmatrix} + D_{12} \begin{pmatrix} Y(1) \\ Y(2) \\ \vdots \\ 0 \\ \vdots \\ \vdots \\ 0 \end{pmatrix} + D_{21} \begin{pmatrix} 0 \\ \vdots \\ 0 \\ Y(2) \\ Y(1) \\ 0 \\ \vdots \\ 0 \end{pmatrix} + \cdots
$$

$$\cdots (11)$$

where $X_i(j)$ represents the No. j data on i wavelength, j ($j\Delta t$).

For this equation (11), it can be understood that since the material parameter is not dependent on wavelength, the coefficient $C_i$ is common for all the wavelengths, but that since the material spectrum varies from wavelength to wavelength, the coefficient $D_i$ becomes the linear function of the wavelength. For this reason, computation time required for the estimation of a material parameter and a material spectrum is remarkably reduced.

If equation (11) is fit to the observed time-resolution spectrum data, a material parameter and a material spectrum can be obtained from the relationships among the foregoing equations (5), (6) and (7). Computation time is extremely shorter than that with the global analysis based on the conventional nonlinear least-square method, for instance, by as much as 3 orders.

The equation (11) is expressed for the two-component system, but it can, of course, be extended to the multi-component system.

Examples of the present invention will be described in more detail as follows:

Example 1

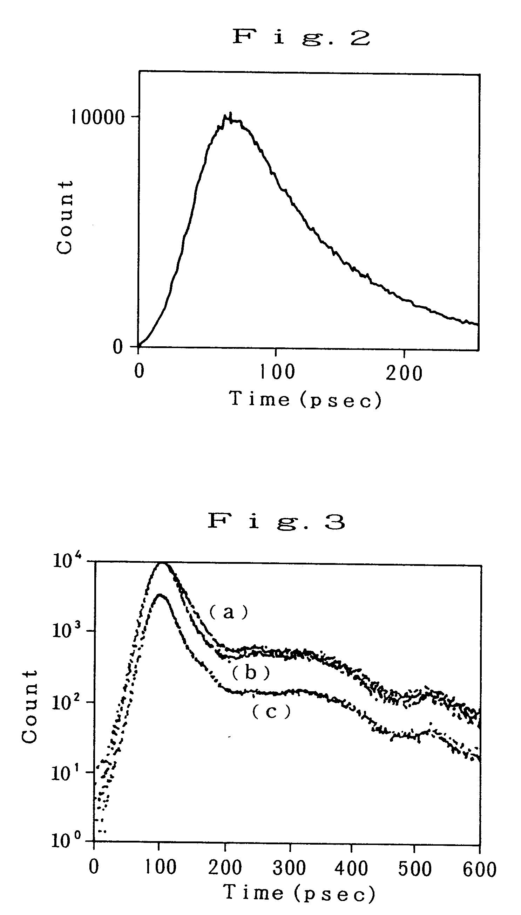

For the observed transient response waveform as indicated in Fig. 2, a comparison was made as to the performance of analysis between the device of the present invention and the conventional nonlinear least-square method.

In the one-component system (N=1), the following settings were made.

$A_1 = 1.0$
$\tau_1 = 80.0$ps
Device function FWHM = 20.0ps
Pseudo-Poisson noise
Maximum count number : 10000
Number of sampling points : 256

A comparison of the estimated results is shown in Table 1.

The device of the present invention can compute data in a time period of less than 1/16 compared with the computing device operating on the nonlinear least-square method, while it retains the same level of accuracy.

Table 2 indicates a comparison of the estimation results of the two-component system. It shows well how the device of the present invention permits high-speed analyses with a high accuracy.

When the amount of shift is incorporated into a model as an unknown parameter, the amount of computation per shift of the channel shift between the instrumental response function and the transient waveform is less by more than 1 order compared with the nonlinear least-square method. As a whole, computation time can be reduced by more than one hundred times.

Table 1

| Estimation result | | $\tau_1$ (ps) 80.0 | $A_1$ 1.00 | Computation time(msec) |
|---|---|---|---|---|
| Input adaptive type autoregressive modeling | Average | 80.0 | 1.00 | 12 |
| | Standard deviation | 0.3 | 0.01 | |
| Nonlinear least-square method | Average | 79.8 | 1.00 | 200 |
| | Standard deviation | 0.2 | 0.01 | |

Table 2

| Estimation result | | $\tau_1$ (ps) 10.0 | $\tau_2$ (ps) 20.0 | $A_1$ 0.50 | $A_2$ 0.50 | Computation time(msec) |
|---|---|---|---|---|---|---|
| Input adaptive type autoregressive modeling | Average | 9.1 | 19.8 | 0.47 | 0.53 | 15 |
| | Standard deviation | 1.8 | 0.9 | 0.09 | 0.09 | |
| Nonlinear least-square method | Average | 7.7 | 18.9 | 0.40 | 0.61 | 610 |
| | Standard deviation | 2.8 | 1.2 | 0.15 | 0.15 | |

Example 2

For the observed transient response waveform as indicated in Fig. 3, a comparison was made as to performance of analysis between the device of the present invention and the analyzing device by the conventional nonlinear least-square method.

Table 3 indicates the measurement conditions, while Table 4 shows the estimation results.

The device of the present invention can compute data in a time period of less than 1/500 compared with the computing device operating on the nonlinear least-square method, while it retains the same or higher level or accuracy.

It shows well how the device of the present invention permits high-speed analysis with a high accuracy.

It is needless to say that this invention is not limited to the above examples. Various other configurations can be applied to specific components of the device of the present invention.

Table 3

| Sample | Excitation wavelength | Observed wavelength |
|---|---|---|
| (a) Pinacyanol/ethanol(one component) | 585nm | 630nm |
| (b) Pinacyanol/acetone(one component) | 585nm | 630nm |
| (c) Instrumental response function (scattered light) | 585nm | 585nm |

Table 4

| | Estimated life (a) (b) | | Computation time |
|---|---|---|---|
| Input adaptive type autoregressive modeling | $12.7 \pm 1.6$ps | $4.9 \pm 1.8$ps | 0.11sec |
| Nonlinear least-square method | $12.3 \pm 1.1$ps | $4.6 \pm 1.4$ps | 50.34sec |

## Claims

1. A device for analyzing a transient waveform, which comprises:

a computation unit for analyzing the observed transient response waveform that appears as a convolution of a sum waveform of a material parameter exponential function

$$x(t) = \sum_{i=1}^{N} A_i \exp(-t/\tau_i)$$

with an instrumental response function; and

means for outputting the results of said analysis; characterised in that:

said computation unit comprises means for analysing said observed waveform using an input adaptive type autoregressive model consisting of a linear function of regressive coefficients dependent upon material parameters and represented by the equation:

$X(j\Delta t) = C_1 \cdot X((j-1)\Delta t) + C_2 \cdot X((j-2)\Delta t) + \cdots + C_N \cdot X((j-N)\Delta t) + D_1 \cdot Y(j\Delta t) + D_2 \cdot Y((j-1)\Delta t) + \cdots + D_N \cdot Y((j-N+1)\Delta t)$

where $X(t)$ is the observed transient response waveform, $Y(t)$ is the instrumental response function and $C_i$ and $D_i$ are the regressive coefficients dependent upon the material parameters $A_i$ and $\tau_i$; wherein the relationships between the material parameters $A_i$ and $\tau_i$ and the coefficients $C_i$ and $D_i$ are given by the equations:

$$\tau_i = -\frac{\Delta t}{\ln Z_i} \ (i = 1,...,N)$$

and

$$D_i = \sum_{j=1}^{N} (A_j \cdot Z_j^i - \sum_{k=0}^{i-1} C_{i-k} \cdot A_j \cdot Z_j^k)$$

and the solutions of

$$Z^N - C_1 \cdot Z^{N-1} - C_2 \cdot Z^{N-2} - \cdots - C_N = 0$$

2. A device for analyzing a transient waveform as claimed in claim 1, wherein said means for analyzing further comprises means for incorporating the amount of channel shift between the instrumental response function and the transient waveform of a sample as an unknown parameter into the input adaptive type autoregressive model, and means for determining the amount of shift as solutions of simultaneous equations representing said autoregressive model.

3. A device for analyzing a transient waveform as claimed in claim 1 or 2, further comprising means for inputting more than one transient response waveform from a plurality of samples, and wherein said computation unit analyzes a convolution of the observed transient response waveforms of plural samples.

4. A device for analyzing a transient waveform as claimed in any preceding claim, wherein the transient waveform appears not only as a convolution of a sum waveform of a material parameter exponential function with an instrumental response function, but also as a function of wavelength, and said means for analyzing analyzes said waveform as an extended input adaptive type autoregressive model consisting of a linear function of regressive coefficients dependent upon material parameters and material spectra.

## Patentansprüche

1. Gerät zum Analysieren einer vorübergehenden Wellenform, umfassend:
   eine Berechnungseinheit zum Analysieren der beobachteten vorübergehenden Antwortwellenform, die als Faltung einer Summenwellenfonn einer Materialparameter-Exponentialfunktion

$$x(t) = \sum_{i=1}^{N} A_i \exp(-t/\tau_i)$$

   mit einer Instrumentenantwortfunktion in Erscheinung tritt; und
   eine Einrichtung zum Ausgeben der Analyseresultate;
   **dadurch gekennzeichnet**, daß
   die Berechnungseinheit eine Einrichtung aufweist zum Analysieren der beobachteten Wellenform unter Verwendung eines eingegebenen adaptiven autoregressiven Modells, bestehend aus einer linearen Funktion von regressiven Koeffizienten in Abhängigkeit von Materialparametern und dargestellt durch die Gleichung:
   $$X(j\Delta t) = C_1 \cdot X((j-1)\Delta t) + C_2 \cdot X((j-2)\Delta t) + \cdots + C_N \cdot X((j-N)\Delta t) + D_1 \cdot Y(j\Delta t) + D_2 \cdot Y((j-1)\Delta t) + \cdots + D_N \cdot Y((j-N+1)\Delta t)$$
   wobei X(t) die beobachtete vorübergehende Antwortwellenform, Y(t) die Instrumentenantwortfunktion und $C_i$ und $D_i$ die regressiven Koeffizienten in Abhängigkeit der Materialparameter $A_i$ und $\tau_i$ sind; wobei die Beziehung zwischen den Materialparametern $A_i$ und $\tau_i$ sowie den Koeffizienten $C_i$ und $D_i$ gegeben sind durch die Gleichungen:

$$\tau_i = -\frac{\Delta t}{\ln Z_i} \quad (i = 1,...,N)$$

   und

$$D_i = \sum_{j=1}^{N} \left( A_j \cdot Z_j^i - \sum_{k=0}^{i-1} C_{i-k} \cdot A_j \cdot Z_j^k \right)$$

   und die Lösungen von

$$Z^N - C_1 \cdot Z^{N-1} - C_2 \cdot Z^{N-2} - \cdots - C_N = 0$$

2. Gerät zum Analysieren einer vorübergehenden Wellenform nach Anspruch 1, bei dem die Einrichtung zum Analysieren außerdem eine Einrichtung aufweist, um den Betrag der Kanalverschiebung zwischen der Instrumentenantwortfunktion und der vorübergehenden Wellenform einer Probe als einen unbekannten Parameter in das eingegebene adaptive autoregressive Modell zu inkorporieren, und eine Einrichtung enthält, um den Betrag der Verschiebung zu bestimmen als Lösungen simultaner Gleichungen, die das autoregressive Modell repräsentieren.

**3.** Gerät zum Analysieren einer vorübergehenden Wellenform nach Anspruch 1 oder 2, außerdem umfassend eine Einrichtung zum Eingeben von mehr als einer vorübergehenden Antwortwellenform aus einer Mehrzahl von Proben, wobei die Berechnungseinheit eine Faltung der beobachteten vorübergehenden Antwortwellenform mehrerer Proben analysiert.

**4.** Gerät zum Analysieren einer vorübergehenden Wellenform nach irgendeinem vorhergehenden Anspruch, bei dem die vorübergehende Wellenform nicht nur als eine Faltung einer Summenwellenform einer Materialparameter-Exponentialfunktion mit einer Instrumentenantwortfunktion in Erscheinung tritt, sodann außerdem als eine Funktion der Wellenlänge, und die Einrichtung zum Analysieren die Wellenform analysiert als ein erweitertes eingegebenes adaptives, autoregressives Modell, bestehend aus einer linearen Funktion regressiver Koeffizienten in Abhängigkeit von Materialparametern und Materialspektren.

## Revendications

**1.** Dispositif d'analyse d'une forme d'onde transitoire qui comporte:

une unité de calcul pour analyser la forme d'onde de la réponse transitoire qui apparaît comme convolution d'une forme d'onde constituée de la somme d'une fonction exponentielle d'un paramètre du matériau:

$$x(t) = \sum_{i=1}^{N} A_i \exp(-t/\tau_i)$$

avec une fonction de réponse instrumentale; et

un moyen pour émettre les résultats de ladite analyse;

caractérisé en ce que:

ladite unité de calcul comporte un moyen pour analyser ladite forme d'onde observée en recourant à un modèle autorégression du type adaptatif aux entrées, constitué d'une fonction linéaire de coefficients de régression dépendant de paramètres du matériau et représentée par l'équation:

$$X(j\Delta t) = C_1.X((j - 1)\Delta t) + C_2.X((j - 2)\Delta t) + ... + C_N.X((j - N)\Delta t) + D_1.Y(j\Delta t) + D_2.Y((j - 1)\Delta t) + ... + D_N.Y((j - N+ 1)\Delta t)$$

dans laquelle X(t) représente la forme d'onde de la réponse transitoire observée, Y(t) est la fonction de réponse instrumentale et $C_i$ et $D_i$ sont les coefficients de régression dépendant des paramètres de matériau $A_i$ et $\tau_i$; dans laquelle les relations entre les paramètres du matériau $A_i$ et $\tau_i$ et les coefficients $C_i$ et $D_i$ sont données par les équations:

$$\tau_i = (\Delta t/l_n Z_i).(i = 1, ..., N)$$

et

$$D_i = \sum_{j=1}^{N} (A_j . Z_j^i - \sum_{k=0}^{i-1} C_{i-k}.A_j . Z_j^k)$$

et les solutions de

$$Z^N - C_1.Z^{N-1} - C_2.Z^{N-2} - ... - C_N = 0$$

**2.** Dispositif d'analyse d'une forme d'onde transitoire selon la revendication 1, dans lequel ledit moyen d'analyse comporte en outre un moyen pour incorporer l'amplitude du décalage des canaux entre la fonction de réponse instrumentale et la forme d'onde transitoire d'un échantillon, comme paramètre inconnu dans le modèle à auto-régression du type adaptatif aux entrées, et un moyen pour déterminer l'ampleur du décalage comme solution d'équations simultanées représentant ledit modèle à auto-régression.

3.  Dispositif d'analyse d'une forme d'onde transitoire selon la revendication 1 ou 2, comportant en outre un moyen pour introduire davantage qu'une forme d'onde de réponse transitoire à partir de plusieurs échantillons, et dans lequel ladite unité de calcul analyse une convolution des formes d'onde de la réponse transitoire observée sur plusieurs échantillons.

4.  Dispositif d'analyse d'une forme d'onde transitoire selon l'une quelconque des revendications précédentes, dans lequel la forme d'onde transitoire apparaît non seulement comme convolution d'une forme d'onde constituant la somme d'une fonction exponentielle d'un paramètre du matériau et d'une fonction de réponse instrumentale, mais également comme fonction de la longueur d'onde, et ledit moyen d'analyse analyse ladite forme d'onde comme modèle à auto-régression étendu du type adaptatif aux entrées, constitué d'une fonction linéaire de coefficients de régression dépendant de paramètres du matériau et de spectres du matériau.

## F i g . 1 (a)

## F i g . 1 (b)

## F i g . 1 (c)

# Fig. 2

# Fig. 3